Europäisches Patentamt

European Patent Office

Office européen des brevets

(19)

(11) Veröffentlichungsnummer: **0 286 806 B1**

(12) **EUROPÄISCHE PATENTSCHRIFT**

(45) Veröffentlichungstag der Patentschrift: **07.01.93**

(51) Int. Cl.⁵: **G01S 13/90**

(21) Anmeldenummer: **88102686.8**

(22) Anmeldetag: **24.02.88**

(54) Verfahren zur topografischen Kartierung.

(30) Priorität: **09.04.87 DE 3712065**

(43) Veröffentlichungstag der Anmeldung:
**19.10.88 Patentblatt 88/42**

(45) Bekanntmachung des Hinweises auf die
Patenterteilung:
**07.01.93 Patentblatt 93/01**

(84) Benannte Vertragsstaaten:
**DE FR GB IT**

(56) Entgegenhaltungen:
**GB-A- 1 589 825**
**US-A- 3 178 711**
**US-A- 3 790 939**
**US-A- 4 084 158**

**IEEE, EASCON '83, 19.-21. September 1983,
Seiten 465-475, Washington DC, US, New
York, US; E. BROOKNER et al.: "Derivation of
a radar architecture for air surveillance"**

**IDEM**

**IEEE, TRANSACTIONS ON AEROSPACE AND
ELECTRONIC SYSTEMS, Band AES-11, Nr. 3,
Mai 1975, Seiten 326-331, New York, US; J.C.
KIRK: "A discussion of digital processing in
synthetic apesture radar"**

(73) Patentinhaber: **DORNIER GMBH
Postfach 1420
W-7990 Friedrichshafen 1(DE)**

(72) Erfinder: **Schüssler, Harald, Dr. Ing.
Alpenblick 1
W-7758 Daisendorf(DE)**
Erfinder: **Bender, Oswald, Dipl.-Ing.
Hoher Weg 56
W-7990 Friedrichshafen 24(DE)**

(74) Vertreter: **Landsmann, Ralf, Dipl.-Ing.
DORNIER GMBH - Patentabteilung - Kleeweg
3
W-7990 Friedrichshafen 1(DE)**

EP 0 286 806 B1

**Beschreibung**

Die Erfindung betrifft ein Verfahren zur topografischen Kartierung der Erdoberfläche duch Höhenmessung mittels Radar mit synthetischer Apertur und einer elektronisch gesteuerten Antennenkeule.

Die topografische Kartierung durch Abtasten der Erdoberfläche mittels Radargrammetrie mit satellitengetragenen Mikrowellensensoren ist noch in den Anfängen. Ein eindruckvolles Beispiel für die potentielle Leistungsfähigkeit derartiger Sensorsysteme wurde vom Jet Propulsion Laboratory in Pasadena/USA vorgestellt. Damit konnte durch Stereoauswertung zweier Bildfolgen, geliefert vom Shuttle Imaging Radar SIR-B aus aufeinanderfolgenden Erdumläufen, ein engmaschiges digitales Höhenmodell des Mt. Shasta in Nordkalifornien erstellt werden; veröffentlicht unter "Radar Stereomapping Techniques and Application to SIR-B Images of Mt. Shasta", F.W. Leberl et al, IEEE Trans. Geoscience and Remote Sensing Vol. GE 24, No. 4, July 1986. Einige Verfahren zur flächendeckenden Radarhöhenmessung sind in "Microwave Remote Sensing", Vol. II, F.T. Ulaby, R.K. Moore und A.E. Fung veröffentlicht, worin das Prinzip des Synthetic Apertur Radars (SAR) eine wichtige Rolle spielt, da dieses Verfahren die für engmaschige Höhenmodelle erforderliche Flächenauflösung auch für Messungen aus dem Weltraum liefern kann. Topografische Kartierungen sind durch Auswertung des parallaktischen Effekts möglich, der in zwei aus unterschiedlichen Umlaufbahnen aufgenommenen SAR-Bildern auftritt. Wegen der eingeschränkten Flächendeckung und der extrem aufwendigen Datengewinnung, wie in "Radar Stereomapping Techniques and Application to SIR-B Images of Mt.Shasta" beschrieben ist, sind stereografische Verfahren für weltweite topografische Kartierungen jedoch nicht interessant.

Ein interferometrisches Seitensichtradar mit synthetischer Apertur liefert die gewünschten topografischen Daten direkt aus den gemessenen Ablagewinkeln der Bildelemente. Das in "Microwave Remote Sensing" beschriebene SAR-System benötigt zwei Antennen und zwei Bildprozessoren mit komplexen (Amplitude, Phase) Datenkanälen. Problematisch sind hierbei die Höhenmehrdeutigkeiten, die durch Phasenunterschiede nur ganzzahlige Vielfache von $\pm \pi$ verursacht werden.

Für die Erstellung digitaler Höhenmodelle werden normalerweise nur mäßige Flächenauflösungen - beispielsweise 250 m x 250 m - gefordert, aber die Höhenauflösung soll im Meterbereich liegen. Dafür bietet sich das klassische Prinzip der Radarhöhenmessung an, bei dem die Flächenauflösung durch die (reale oder synthetische) Antennenapertur und die Höhenauflösung mittels Kurzpulstechnik erzielt werden. Das Verfahren ist nur für steile Einfallswinkel praktikabel und die Antennenkeule muß in geeigneter Weise geschwenkt werden, damit ein hinreichend breiter Streifen parallel zur Fußspur des Raumfahrzeugs erfasst wird.

Bei dem vom Jet Propulsion Laboratory konzipierten und in "A Scanning Radar Altimeter for Mapping Continental Topography", T.H. Dixon, JPL Publication 86-26, $2^{nd}$ Spaceborne Imaging Radar Symposium, JPL April 1986 veröffentlichten Verfahren handelt es sich um ein Seitensichtradar mit synthetischer Apertur, bei dem die Keule elektronisch quer zur Flugrichtung geschwenkt wird. Dabei wird der Nadir wegen der extrem starken Rückstreuung der Radarsignale ausgeschlossen.

Aufgabe der Erfindung ist es, annähernd die gesamte Erdoberfläche unter minimalem Zeitaufwand topografisch zu erfassen, wobei die Höheninformationen durch Bestimmung der Schwerpunkte im Leistungsprofil von Radarechos durch eine elektronisch gesteuerte Antennenkeule aus Gebieten um die Satellitenfußspur eines orbitalen Systems unter Anwendung des Prinzips des Radars mit synthetischer Apertur ermittelt werden.

Zur Lösung der gestellten Aufgabe sind die kennzeichnenden Merkmale des Anspruchs 1 vorgesehen. Vorteilhafte Weiterbildungen ergeben sich aus den Unteransprüchen.

Der Vorteil der Erfindung besteht darin, dass durch einen Gruppenstrahler mit elektronischer Diagrammsteuerung in zwei Hauptebenen, der eine konische Schwenkung einer Antennenkeule um den Nadir ermöglicht, die Gesamtlaufzeit von Impuls und Echo nahezu konstant bleibt. Der Bereich der eindeutigen Höhenmessung kann daher maximiert werden, ohne dass eine spezielle Empfangsantenne vorgesehen werden muß. Dadurch entfallen auch alle mit einer zweiten Antenne verbundenen Entkopplungsprobleme. Die gesamte Erdoberfläche kann somit unter minimalem Zeitaufwand topografisch erfasst werden. Wegen der geforderten globalen Erfassung von Höheninformationen kommen für einen Einsatz nur orbitale Systeme, wie Satelliten oder Raumtransporter in Betracht. Für die Anwendung sind Radarsensoren wegen ihrer nahezu witterungsunabhängigen Einsetzbarkeit geradezu ideal.

Durch die konische Keulenschwenkung kann das Pulsraster konstant gehalten werden und der reflektierende Bereich der Erdoberfläche liegt innerhalb des Empfangsfensters. Resultat der digitalen Prozessierung ist ein topografisch relevanter Höhenwert pro Auflösungszelle. Alle Höhenwerte (topografische Pixel) werden in ein erdgebundenes Koordinatensystem transformiert.

Das herkömmliche Höhenmeßverfahren wird nach Maßgabe des Schwerpunktes im Echoleistungsprofil

2

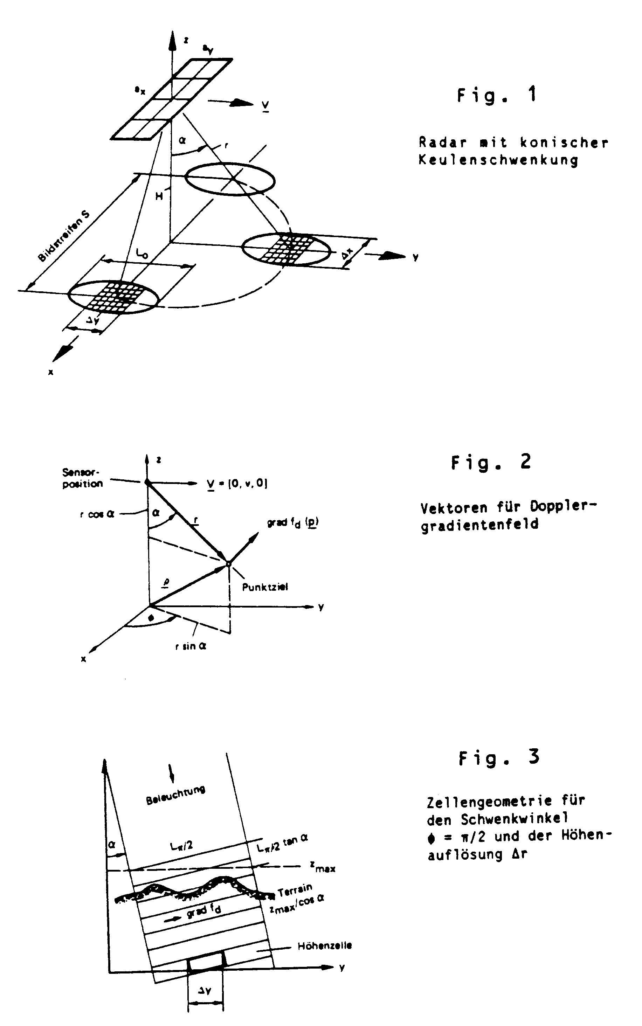

durch einen Mikrowellensensor mit einer um den Nadir konisch schwenkbaren Antennenkeule verbessert und realisiert. Das Funktionsprinzip ist in Figur 1 beschrieben und veranschaulicht.

Die Flächennormale eines planaren Gruppenstrahlers mit Abmessungen $a_x$ x $a_y$ weist zum Nadir. Das Strahlenzentrum der in beiden Hauptebenen elektronisch schwenkbaren Antennenkeule liegt auf dem Kegelmantel mit dem halben Öffnungswinkel $\alpha$. Die Ausleuchtungsellipsen haben die große Achse $L_o$ und die kleine Achse $\Delta x$; letztere bestimmt die geometrische Auflösung quer zur Flugrichtung. Wegen der beschriebenen Antennenorientierung bleiben die Achsenrichtungen im gesamten Schwenkbereich erhalten. Der Bildstreifen wird durch konische Keulenschwenkung vollständig ausgeleuchtet, wobei die Meßsequenz für $N_y$ Zellen in Flugrichtung innerhalb der Ausleuchtungsellipse in der Zeit $N_y$ $\Delta y/v$ abgeschlossen sein muß.

Die geometrische Auflösung in Flugrichtung erfolgt nach dem SAR-Prinzip nach Maßgabe der Integrationszeit und des Dopplergradienten. Die Terrainhöhe wird durch Laufzeitmessungen ermittelt, somit sind die Höhenzellen schräg um den (konstanten) Winkel $\alpha$ gegenüber der Vertikalen gestapelt.

Dieses Meßprinzip verspricht eine ganze Reihe von Vorteilen: Der Neigungswinkel $\alpha$ ist konstant und kleiner als bei einem konventionellen Seitensichtradar mit gleicher Streifenbreite, da der Nadirstreifen nicht ausgeschlossen werden muß. Bei einer Flughöhe von 250 km wird beispielsweise für einen 100 km breiten Streifen ein Neigungswinkel von nur 11° benötigt. Wegen des konstanten Einfallswinkels werden die Schwankungen in den Echoleistungen minimiert, insbesondere werden die starken Nadir-Echos vermieden. Der minimale Neigungswinkel bedingt überdies minimale Antennenlängen $a_x$ für die gewünschte geometrische Auflösung $\Delta x$. Schliesslich haben die Echos aus gleichen Höhenniveaus innerhalb des Streifens gleiche Laufzeiten. Das ermöglicht effektive Abtastschemata in Verbindung mit periodisch gesendeten Pulsfolgen.

Für die Dopplerauflösung ist das Dopplergradientenfeld innerhalb der Höhenzellen maßgebend. Das Diagramm in Figur 2 zeigt die geometrischen Zusammenhänge der betreffenden Vektoren. Für einen Punkt mit dem Ortsvektor $\underline{p}$ = [$p_x$, $p_y$, $p_z$] ist die Dopplerverschiebung des Echos mit der Wellenlänge $\lambda_o$

$$f_d\,(\underline{p}) = \frac{2v_r}{\lambda_o} = \frac{2}{\lambda_o r}\,(\underline{v}\cdot\underline{r})$$

Wegen $\underline{p}$ = $\underline{r}$ + $H\underline{e}_z$ und $\underline{v}\cdot\underline{e}_z$ = 0 folgt $f_d(\underline{p})$ = $2vp_y/(\lambda_o r)$
mit

$$r = (p_x^2 + p_y^2 + p_z^2 - 2p_z H + H^2)^{1/2}$$

Punkte konstanter Schrägentfernung r haben den Ortsvektor

$\underline{p}$ = [r $\sin\alpha$ $\cos\phi$ , r $\sin\alpha$ $\sin\phi$ , H-r $\cos\alpha$]

und das skalare Dopplerfeld den Gradienten

$$\mathrm{grad}\ f_d = \left[\frac{\partial f_d}{\partial p_x}\,,\ \frac{\partial f_d}{\partial p_y}\,,\ \frac{\partial f_d}{\partial p_z}\right]$$

$$\mathrm{grad}\ f_d = \frac{2v}{\lambda_o r}\ [\ -\sin^2\!\alpha\ \sin\phi\ \cos\phi\,,\ 1-\sin^2\!\alpha\ \sin^2\!\phi\,, \\ \sin\alpha\ \cos\alpha\ \sin\phi]\qquad\qquad (1)$$

Wegen $\underline{r}\cdot\mathrm{grad}\ f_d$ = 0 steht der Dopplergradient senkrecht auf dem Entfernungsvektor $\underline{r}$, er liegt also, wie gewünscht, tangential zur entsprechenden Höhenzelle. Der Betrag ist gegeben durch

3

$$| \text{grad } f_d | = \begin{cases} \dfrac{2v}{\lambda_o r} & \text{für } \phi = 0 \\[2ex] \dfrac{2v}{\lambda_o r} \cos\alpha & \text{für } \phi = \pi/2 \end{cases} \qquad (2)$$

Der Dopplergradient orientiert sich im wesentlichen in Flugrichtung $\underline{e}_y$, denn nach (1) bleibt der Drehwinkel

$$\epsilon \simeq (-\sin^2\alpha \, \sin\phi \, \cos\phi) / (1 - \sin^2\alpha \, \sin^2\phi)$$

in der (x, y)-Ebene für alle Schwenkwinkel $0 \leq \phi \leq \pi$ unter einem Grad bei einem Neigungswinkel von $\alpha$ = 10°. Durch die Erdrotation wird eine zusätzliche Drehung des Dopplergradienten von maximal 4° verursacht. Auch das ist für den betrachteten Anwendungsfall zu vernachlässigen, könnte aber auch durch eine angepasste Gierwinkelregelung des Raumfahrzeugs (und damit der Antenne) ausgeglichen werden.

Die geometrische Auflösung $\Delta y$ in Flugrichtung kann also für Ausleuchungsellipsen im Streifen durch Dopplerfilterung nach dem SAR-Prinzip durchgeführt werden. Da für jede Auflösungszelle A = $\Delta x \, \Delta y$, wie später ausgeführt, mehrere unabhängige Beobachtungen ($N_L$) erforderlich sind, werden zunächst Teilzellen der Größe $\Delta x \, \Delta y / N_L$ aufgelöst. Die erforderliche Zeit für die kohärente Integration ist dafür

$$T_{int} \approx (| \text{grad } f_d | \, \Delta y / N_L)^{-1}$$

Die große Achse $L_o$ der Ausleuchtungsellipse wurde in der Figur 1 für den Schwenkwinkel $\phi$ = 0 definiert. Für $\phi = \pi/2$ und fester Antennenbreite $a_y$ wird $L_{\pi/2} = L_o/\cos\alpha$ , wobei jeweils senkrecht zur Stapelung der Höhenzellen gemessen wird. Die geometrischen Verhältnisse für die Ausleuchtungsellipse über der y-Achse sind in Figur 3 gezeigt.

Das Terrain muß im Höhenintervall $z_{max}$ liegen. Es wird mit kurzen trägermodulierten Impulsen der Dauer $T_p$ beleuchtet, die als Chirp-Signale abgestrahlt und um den Faktor $r_{ex}$ expandiert werden. Die maximale Echodauer ist dann mit $c_o$, der Ausbreitungsgeschwindigkeit der elektromagnetischen Wellen

$$T_{echo} = \frac{2}{c_o \cos\alpha} (L_o \tan\alpha + z_{max}) + T_p r_{ex} \qquad (3).$$

$$\text{mit } T_p = 2 \, \Delta r / c_o$$

Die Impulse werden periodisch im Abstand $T_s$ gesendet. In den dazwischenliegenden Lücken werden Echos von bereits vorher bestrahlten Gebieten empfangen, wobei die Antennenkeule entsprechend geschwenkt wird. Diese Umschaltungen werden innerhalb der Zeit $T_g$ abgeschlossen. Das Taktintervall muß dann länger sein als

$$T_s \geq T_p r_{ex} + 2T_g + T_{echo} \qquad (4)$$

Die Taktrate $1/T_s$ wird schliesslich so gewählt, dass die Echos genau in der freibleibenden Lücke empfangen werden können. Das ist bei konischer Keulenschwenkung und einheitlichem Höhenintervall $z_{max}$ während einer Meßsequenz stets möglich. Wegen $\Delta x < L_o$ sind die Gleichungen (3) und (4) systembestimmend.

Für die geometrische Auflösung in Flugrichtung muß jede Zelle im Abtastintervall T über die Dauer $T_{int}$ beleuchtet werden. Um spektrale Überfaltungen zu vermeiden, muß die Abtastrate grösser sein als die Dopplerbandbreite der Echos. Üblicherweise wählt man dafür 20 % Reserve. Die mittlere und für Echos aus unterschiedlichen Gebieten auch stark unterschiedliche, aber bekannte, Dopplerverschiebung muß im Rahmen der Datenverarbeitung eliminiert werden. Auch die Wanderung der Auflösungszelle durch mehrere Höhenniveaus ist zu berücksichtigen. Für die gewählte Geometrie wird die Dopplerbandbreite der empfangenen Echos nach (2)

$$\Delta f_d = L \mid \text{grad } f_d \mid = 2L_o \, v/(\lambda_o r)$$

und damit wird eine Abtastrate

$$T^{-1} = 2,4 \, L_o \, v/(\lambda_o r) \qquad (5)$$

benötigt.

Schliesslich wird die erforderliche Zeit für die kohärente Integration

$$T_{int} = \frac{\lambda_o \, r \, N_L}{2v \, \Delta y} \qquad (6).$$

Will man in Flugrichtung $N_y$ Auflösungszellen der Größe A bilden und berücksichtigt man nur den Nickwinkelfehler $\delta_x$ der Bordantenne, dann muß die große Achse $L_o$ der Ausleuchtungsellipse größer sein als

$$L_o \geqq N_y \, \Delta y + 2 \, \delta_x H \qquad (7).$$

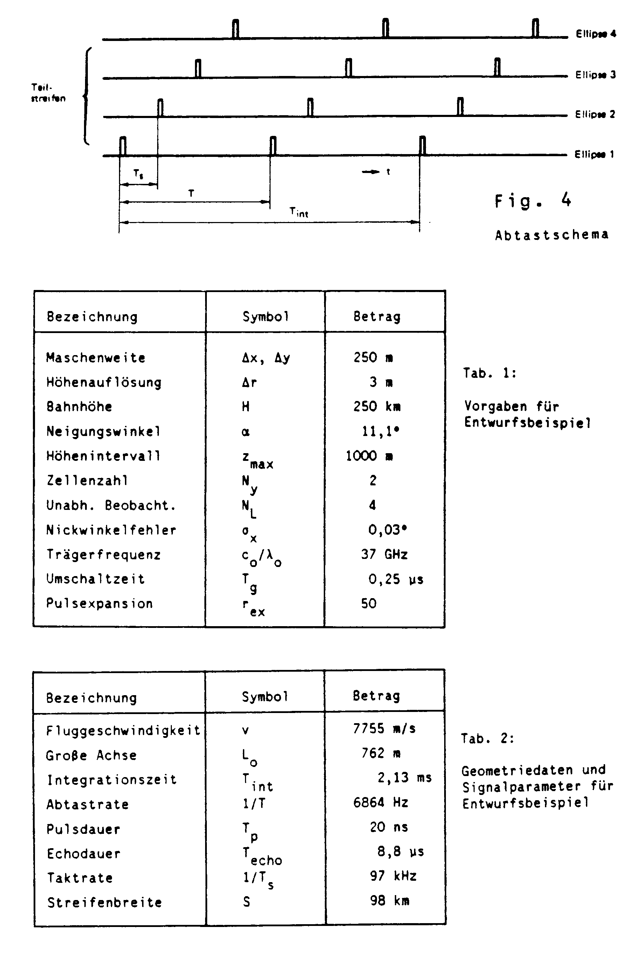

Da die Taktfrequenz $1/T_s$ in der Regel weit über der Abtastrate $1/T$ liegt, können während der erforderlichen Integrationszeit $T_{int} \gg T$ durch geeignete Keulenschwenkungen bereits mehrere Zellen, also ein gesamter Teilstreifen, ausgeleuchtet werden. Dieses veranschaulicht das Abtastschema in Figur 4. Verbleibt für eine Meßsequenz die Zeitdauer $N_y \, \Delta y/v > T_{int} + T$, dann können entsprechend viele Teilstreifen abgedeckt werden. Die erreichbare Breite S des Bildstreifens wird dann

$$S \approx \frac{T \, N_y \, \Delta x \, \Delta y}{T_S \, (T_{int} + T) \, v} \overset{!}{=} 2 \, H \, \tan \alpha \qquad (8)$$

sollte also an Bahnhöhe und Neigungswinkel angepasst werden.

Streng genommen können nur die ganzzahligen Anteile der Quotienten $T/T_s$ und $N_y \, \Delta y/[v \, (T_{int} + T)]$ ausgenutzt werden.

Zur Höhenmessung für digitale Geländemodelle kann die mittlere Höhe eines Terrains z (x, y) in einer Auflösungszelle $A = \Delta x \, \Delta y$ durch einen Quader $h \, \Delta x \, \Delta y$ gleichen Rauminhaltes definiert werden als

$$h \, \Delta x \, \Delta y = \int_{(A)} z \, (x, y) \, dA.$$

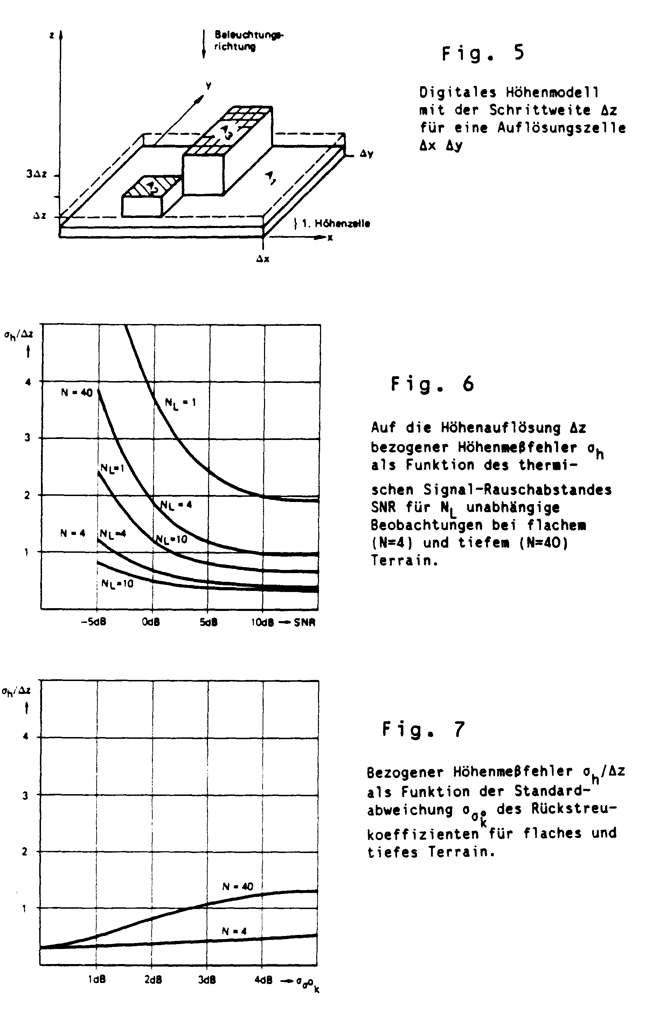

Wird, wie in Figur 5 veranschaulicht, für die Auflösungszelle ein (beliebig engmaschiges) digitales Höhenmodell mit der Höhenquantisierung $\Delta z$ zugrundegelegt, so folgt für die mittlere Höhe

$$h = \frac{1}{\Delta x \, \Delta y} \sum_{(k)} k \, \Delta z \, A_k = \left( \sum_{(k)} k \, \Delta z \, A_k \right) / \left( \sum_{(k)} A_k \right) \qquad (9).$$

Bei vertikaler Radarausleuchtung der Auflösungszelle A und einheitlichem Rückstreukoeffizienten $\delta°$ wird von der k-ten Höhenzelle die Leistung $P_k \sim \delta° A_k$ empfangen. Aus (9) folgt dann direkt

$$h = \Delta z \left( \sum_{(k)} k \, P_k \right) / \left( \sum_{(k)} P_k \right) \qquad (10).$$

Das heißt, die mittlere Höhe entspricht dem Schwerpunkt des Leistungsprofils im Radarecho. Meßfehler werden in diesem einfachen Geländemodell durch die Höhenquantisierung, durch Ungenauigkeiten in der Leistungsbestimmung sowie durch unterschiedliche Rückstreukoeffizienten $\delta°_k$ verursacht. Die anschliessende Fehlerabschätzung erfolgt für eine spezielle Geländeform, wobei das Terrain innerhalb N Höhenzellen liegt und wobei jede die gleiche Rückstrahlfläche $A_k = A/N$ hat. Die Teilflächen $A_k$ können durchaus nicht zusammenhängende Flächenstücke innerhalb der Höhenzelle enthalten; deren Bestimmung erfolgt, wie vorher ausgeführt, durch fehlerhafte Leistungsbestimmungen.

Die gemessenen Teilflächen $\tilde{A}_k = A_k + \Delta\tilde{A}_k$ sind unabhängige Zufallsvariable mit dem Mittelwert $\mu = A/N$ und der Standardabweichung $\delta = c\mu$. Die Proportionalitätskonstante c wird später bestimmt.

Die gesamte Höhe $\tilde{h}$ ist dann nach (9)

$$\tilde{h} = \Delta z \frac{\sum_{k-1}^{N} k \, \tilde{A}_k}{\sum_{k=1}^{N} \tilde{A}_k} = \Delta z \frac{(N+1)/2 + \sum_{k=1}^{N} k \, \Delta\tilde{A}_k / A}{1 + \sum_{k=1}^{N} \Delta\tilde{A}_k / A}$$

Für kleine Störungen $\Delta\tilde{A}_k$ gilt näherungsweise

$$\tilde{h} = \Delta z \left[ \frac{N+1}{2} + \frac{1}{A} \sum_{k=1}^{N} k \, \Delta\tilde{A}_k \right] \left[ 1 - \frac{1}{A} \sum_{k=1}^{N} \Delta\tilde{A}_k \right]$$

$$\tilde{h} = \Delta z \left[ \frac{N+1}{2} + \frac{1}{A} \sum_{k=1}^{N} \left( k - \frac{N+1}{2} \right) \Delta\tilde{A}_k \right]$$

mit dem Mittelwert $\mu_h = \Delta z (N+1)/2$.

Die Varianz $\delta_h^2$ wird

$$\delta_h^2 = \left( \frac{\Delta z}{A} \right)^2 \delta^2 \sum_{k=1}^{N} \left( k - \frac{N+1}{2} \right)^2 = \Delta z^2 \, c^2 \, N/12$$

Wird noch der Höhenquantisierungsfehler $\Delta z^2/12$ in der Varianzberechnung berücksichtigt, so ergibt sich

$$\sigma_h^2 \simeq \Delta z^2 (1 + c^2 N)/12 \qquad\qquad (11).$$

Meßfehler bezüglich der Echoleistungen $p_k \sim \delta° A_k$ werden im wesentlichen durch das für abbildende Mikrowellen typische Bildrauschen verursacht.

Die Statistik der dielektrischen Echoleistungen genügt nach "Microwave Remote Sensing", Vol. II, F.T. Ulaby, R.K. Moore und A.K. Fung näherungsweise der Exponentialverteilung mit

$$\sigma_{p_k} = \mu_{p_k}.$$

Wird über $N_L$ unabhängige Leistungsmessungen gemittelt, was beispiesweise durch Einzelmessungen von $N_L$ benachbarten Teilgebieten und anschliessender Überlagerung der Meßwerte nach Maßgabe der gewünschten Auflösungszelle $A = \Delta x \, \Delta y$ erreicht werden kann, dann gilt nach "Microwave Remote Sensing" unter Einbeziehung des Signal-Rauschabstandes SNR aufgrund des additiven Thermalrauschens

$$\sigma_{p_k} = \mu_{p_k} (1 + 1/SNR) /N_L^{1/2}.$$

Bei einem einheitlichen Rückstreukoeffizienten $\delta°$ ist $p_k \sim A_k$ und die Proportionalitätskonstante c wird in diesem Fall

$$c = (1 + 1/SNR)/N_L^{1/2} \qquad (12).$$

Strebt $N_L$, die Anzahl unabhängiger Beobachtungen, gegen unendlich, dann verbleibt nur noch der Höhenquantisierungsfehler.

Bislang wurde von einem einheitlichen Rückstreukoeffizienten $\delta°$ innerhalb der Auflösungszelle ausgegangen, was bekanntlich unrealistisch ist. Nach "Microwave Remote Sensing" muß aber mit Änderungen des Rückstreukoeffizienten von 10 dB und mehr gerechnet werden.

Um den Einfluß inhomogener Rückstreuung auf die Genauigkeit der Höhenmessung abschätzen zu können, wird von einer perfekten Leistungsmessung ausgegangen. Die Zufallsvariablen $\tilde{A}_k$ sind dann

$$\tilde{A}_k = c_1 \, 10^{-(\tilde{\sigma}_k°/10)} = g(\tilde{\sigma}_k°).$$

Der Mittelwert $\mu$ und die Standardabweichung $\delta$ der Zufallsvariablen $\tilde{A}_k$ lassen sich nach "Probability, Random Variables, and Stochastic Processes", A. Papoulis abschätzen in

$$\mu \simeq g/\mu_{\sigma°}) + g''(\mu_{\sigma_k°}) \sigma_{\sigma_k°}^2/2 \; ; \; \sigma \simeq \lg'(\mu_{\sigma_k°}//\sigma_{\sigma_k°}$$

Wegen

$$\frac{d^{(m_k)} g(\tilde{\sigma}_k°)}{d\tilde{\sigma}_k°^m} = \left(-\frac{\ln 10^k}{10}\right)^m g(\tilde{\sigma}_k°)$$

ergibt sich für die entsprechenden Proportionalitätskonstante c

$$c = \boldsymbol{\sigma}/\mu \simeq \left[1/(0{,}23\ \boldsymbol{\sigma}_{\boldsymbol{\sigma}_k}{}^\circ) + 0{,}23\ \boldsymbol{\sigma}_{\boldsymbol{\sigma}_k}{}^\circ/2\right]^{-1} \tag{13}$$

Erwartungsgemäß hängt die Proportionalitätskonstante c nur von der Standardabweichung

$$\boldsymbol{\sigma}_{\boldsymbol{\sigma}_k}{}^\circ$$

des Rückstreukoeffizienten ab.

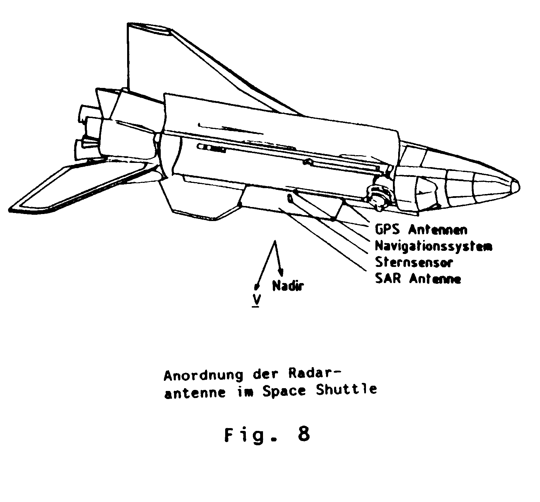

Die Diagramme Figur 6 und Figur 7 zeigen die numerische Auswertung der Gleichungen (11), (12) und (13), wobei flaches Terrain (N = 4) und tiefes Terrain (N = 40) betrachtet wurde. Bei einer Höhenauflösung von beispielsweise 3 m decken N = 40 Höhenzellen eine Geländetiefe von 120 m ab, die für Auflösungszellen mit Maschenweiten von 100 m bis 250 m wohl eine obere Grenze sein dürfte. Aus dem Diagramm in Figur 6 ist der starke Einfluß von $N_L$ zu ersehen. Wird eine Standardabweichung des Rückstreukoeffizienten von ca. 3 dB zugrundegelegt, so empfiehlt sich ein Meßsystem mit $N_L$ = 4 unabhängigen Beobachtungen bei einem Signal-Rauschabstand von ca. 5 dB. Es ist dann bei tiefem Terrain mit einem bezogenen Höhenmeßfehler von $\delta_h/\Delta z \approx 1{,}6$ zu rechnen, was auch durch eine Computersimulation bestätigt wurde.

Ein Entwurfsbeispiel ist folgend beschrieben und mit Tabellen über Vorgaben, Geometriedaten und Signalparameter ergänzt.

Es wird ein Synthetik Apertur Radar mit konischer Keulenschwenkung für topografische Kartierungen im Rahmen von Missionen mit dem amerikanischen Raumtransporter Space Shuttle vorgeschlagen. Die Maschenweite $\Delta x = \Delta y$ soll 250 m betragen und die Höhenauflösung $\Delta r$ soll 3 m sein. Innerhalb jeder Ausleuchtungsellipse werden in Flugrichtung zwei Zellen aufgelöst. Die Bahnhöhe wird mit 250 km vorgegeben. In Anlehnung an "A Scanning Radar Altimeter for Mapping Continental Topography" wird eine Trägerfrequenz von 37 GHz gewählt, die einen guten Kompromiß im Hinblick auf die Antennenabmessungen, die atmosphärische Extinktion sowie den technologischen Stand der elektronischen Bauteile darstellt. Alle Vorgaben für das gewählte Beispiel sind in Tabelle 1 zusammengestellt. Die daraus folgenden Radarparameter wurden nach der vorher diskutierten Theorie berechnet und sind in Tabelle 2 eingetragen.

Im Hinblick auf eine eventuelle Realisierung des vorgeschlagenen Konzepts wurden noch einige technische Parameter berechnet:

Das Synthetik Apertur Radar mit konischer Keulenschwenkung benötigt eine in beiden Hauptebenen elektronisch steuerbare 37 GHz Antenne mit geometrischen Abmessungen von ca. 7,5 m x 2,4 m. Die an Bord empfangenen Radarrohsignale werden mit 2 Bit digitalisiert, was dann zu einer Datenrate von rund 200 MB/s führt. Schliesslich wurde noch die erforderliche Sendeleistung für konservativ geschätzte Übertragungsverluste bestimmt. Für den (vorher) ermittelten Signal-Rauschabstand von SNR = 5 dB in den einzelnen Höhenzellen und einen mittleren Rückstreukoeffizienten $\delta^\circ$ = -10 dB wird eine mittlere Sendeleistung von nur 20 W benötigt.

Die Antenne kann auf eine feste Struktur montiert werden, die gut in den Laderaum des Space Shuttle passt und kann aus diesem, wie in Figur 8 gezeigt, durch Drehung um die Längsachse in die Meßposition gebracht werden. Auf der Antennenrückseite können die Sensoren für die hochgenaue Lagemessung untergebracht werden. Für die Datenauswertung am Boden muß nämlich der zeitabhängige Zustandsvektor der Radarantenne rekonstruiert werden, wobei Genauigkeiten im Meter- bzw. im Bogensekundenbereich gefordert werden. Der Zustandsvektor enthält Positions- und Geschwindigkeitsvektoren des Phasenzentrums, die Richtungsvektoren der Antennenhauptachsen sowie die Bezugszeit. Ein dafür geeignetes Meßsystem wäre ein GPS-Interferometer nach "Chancen der GPS-Satellitennavigation für die Luftfotografie", P. Hartl, A. Wehr, Bildmessung und Luftbildwesen 6/86, in Verbindung mit Sternsensoren und Trägheitsnavigation.

Das vorgeschlagene Verfahren verspricht wegen der konstanten Winkel- und Laufzeitverhältnisse im Bildstreifen gegenüber herkömmlichen Seitensichtradars mehrere Vorteile. Die günstigen Systemeigenschaften werden auch im Entwurfsbeispiel gezeigt, das einen möglichen Einsatz im Raumtransporter behandelt.

**Patentansprüche**

1. Verfahren zur topografischen Kartierung der Erdoberfläche durch Höhenmessung einzelner Auflösungszellen mittels Radar mit synthetischer Apertur und einer elektronisch gesteuerten Antennenkeule eines Gruppenstrahlers, **dadurch gekennzeichnet,** dass die Antennenkeule um die Nadirachse konisch geschwenkt wird, wobei die Schwenkung mittels orthogonaler Phasensteuerung so erfolgt, dass die Gesamtlaufzeit eines Radarpulses für den Such- und Echoweg annähernd konstant bleibt und dass die mittlere Geländehöhe innerhalb einer Auflösungszelle aus dem Schwerpunkt eines Echoleistungsprofils bestimmt wird.

2. Verfahren nach Anspruch 1, dadurch gekennzeichnet, dass die Kartierung in Streifen gleicher Breite erfolgt, wobei innerhalb eines Streifens die weitere Unterteilung in Auflösungszellen mit vorgegebener Abmessung erfolgt.

3. Verfahren nach wenigstens einem der vorhergehenden Ansprüche, dadurch gekennzeichnet, dass die Auflösung in Flugrichtung durch Dopplerfilterung erzielt wird.

4. Verfahren nach wenigstens einem der vorhergehenden Ansprüche, dadurch gekennzeichnet, dass die Auflösung quer zur Flugrichtung durch die Antennenkeule und deren Apertur erzielt wird.

5. Verfahren nach wenigstens einem der vorhergehenden Ansprüche, dadurch gekennzeichnet, dass für den Sende- und Empfangsvorgang zwei voneinander unterschiedliche Keulen, eine Sende- und Empfangskeule verwendet werden, zwischen welchen fortlaufend automatisch umgeschaltet wird.

6. Verfahren nach wenigstens einem der vorhergehenden Ansprüchen, dadurch gekennzeichnet, dass die empfangenen Echosignale heruntergemischt, abgetastet und anschliessend als digitalisierte Daten prozessiert werden.

## Claims

1. Method for the topographical mapping of the Earth's surface by altitude measurements of individual resolution cells by means of synthetic aperture radar and an electronically controlled antenna lobe of an array, characterised in that the antenna lobe is conically swept about the nadir axis, wherein the sweeping is carried out by means of orthogonal phase control such that the total travel time of a radar pulse for the search and echo path remains approximately constant, and that the average land height is determined in a resolution cell from the centre of gravity of an echo power profile.

2. Method according to Claim 1, characterised in that the mapping is carried out in strips of equal width, wherein the further division into resolution cells of predetermined dimension is carried out within a strip.

3. Method according to at least one of the preceding claims, characterised in that the resolution in the direction of flight is obtained by Doppler filtering.

4. Method according to at least one of the preceding claims, characterised in that the resolution transverse to the direction of flight is obtained by means of the antenna lobe and the aperture thereof.

5. Method according to at least one of the preceding claims, characterised in that for the transmission and reception process, two lobes, a transmission lobe and a reception lobe, distinct from one another, are used, between which lobes there is continuous automatic switching.

6. Method according to at least one of the preceding claims, characterised in that the received echo signals are down-converted, sampled and subsequently processed as digitized data.

## Revendications

1. Procédé de cartographie topographique de la surface terrestre par mesure altimétrique de cellules de résolution individuelles au moyen de radar à ouverture synthétique et d'un lobe de rayonnement d'antenne d'un réseau d'antennes commandé électroniquement, caractérisé en ce que le lobe de rayonnement d'antenne est pivoté de manière conique, le pivotement étant réalisé au moyen d'une commande de phase orthogonale de telle façon que la durée de propagation d'une impulsion radar pour les parcours de recherche et d'écho reste approximativement constante, et que l'altitude moyenne du terrain à l'intérieur d'une cellule de résolution est déterminée à partir du centre de gravité d'un profil de puissance d'écho.

2. Procédé selon la revendication 1, caractérisé en ce que la cartographie s'effectue par bandes d'égale largeur, une subdivision supplémentaire en cellules de résolution de dimensions prédéterminées étant effectuée à l'intérieur de chaque bande.

3. Procédé selon l'une au moins des revendications précédentes, caractérisé en ce que la résolution dans la direction de vol est obtenue par filtrage Doppler.

4. Procédé selon l'une au moins des revendications précédentes, caractérisé en ce que la résolution transversalement à la direction de vol est obtenue par le lobe de rayonnement d'antenne et son ouverture.

5. Procédé selon l'une au moins des revendications précédentes, caractérisé en ce qu'il utilise pour l'émission et la réception deux lobes de rayonnement différents, un lobe de rayonnement d'émission et un lobe de rayonnement de réception, entre lesquels une commutation automatique intervient en permanence.

6. Procédé selon l'une au moins des revendications précédentes, caractérisé en ce que les signaux d'échos reçus sont séparés, explorés, puis traités en tant que données numérisées.

Fig. 1

Radar mit konischer
Keulenschwenkung

Fig. 2

Vektoren für Dopplergradientenfeld

Fig. 3

Zellengeometrie für
den Schwenkwinkel
$\phi = \pi/2$ und der Höhenauflösung $\Delta r$

11

Fig. 4

Abtastschema

| Bezeichnung | Symbol | Betrag |
|---|---|---|
| Maschenweite | $\Delta x$, $\Delta y$ | 250 m |
| Höhenauflösung | $\Delta r$ | 3 m |
| Bahnhöhe | H | 250 km |
| Neigungswinkel | $\alpha$ | 11,1° |
| Höhenintervall | $z_{max}$ | 1000 m |
| Zellenzahl | $N_y$ | 2 |
| Unabh. Beobacht. | $N_L$ | 4 |
| Nickwinkelfehler | $\sigma_x$ | 0,03° |
| Trägerfrequenz | $c_o/\lambda_o$ | 37 GHz |
| Umschaltzeit | $T_g$ | 0,25 µs |
| Pulsexpansion | $r_{ex}$ | 50 |

Tab. 1:

Vorgaben für
Entwurfsbeispiel

| Bezeichnung | Symbol | Betrag |
|---|---|---|
| Fluggeschwindigkeit | v | 7755 m/s |
| Große Achse | $L_o$ | 762 m |
| Integrationszeit | $T_{int}$ | 2,13 ms |
| Abtastrate | 1/T | 6864 Hz |
| Pulsdauer | $T_p$ | 20 ns |
| Echodauer | $T_{echo}$ | 8,8 µs |
| Taktrate | $1/T_s$ | 97 kHz |
| Streifenbreite | S | 98 km |

Tab. 2:

Geometriedaten und
Signalparameter für
Entwurfsbeispiel

Fig. 5

Digitales Höhenmodell
mit der Schrittweite $\Delta z$
für eine Auflösungszelle
$\Delta x$ $\Delta y$

Fig. 6

Auf die Höhenauflösung $\Delta z$
bezogener Höhenmeßfehler $\sigma_h$
als Funktion des thermischen Signal-Rauschabstandes
SNR für $N_L$ unabhängige
Beobachtungen bei flachem
(N=4) und tiefem (N=40)
Terrain.

Fig. 7

Bezogener Höhenmeßfehler $\sigma_h/\Delta z$
als Funktion der Standardabweichung $\sigma_{\sigma^o_k}$ des Rückstreukoeffizienten für flaches und
tiefes Terrain.

13

GPS Antennen
Navigationssystem
Sternsensor
SAR Antenne

Nadir

v

Anordnung der Radarantenne im Space Shuttle

Fig. 8